Europäisches Patentamt
European Patent Office
Office européen des brevets

(19)

(11) Publication number: 0 074 275 A1

# EUROPEAN PATENT APPLICATION

(12)

(21) Application number: 82304706.3

(22) Date of filing: 08.09.82

(51) Int. Cl.³: C 08 F 10/00
C 08 F 4/64

(30) Priority: 08.09.81 JP 140361/81

(43) Date of publication of application: 16.03.83 Bulletin 83/11

(84) Designated Contracting States: DE FR GB IT

(71) Applicant: Ube Industries, Ltd.
12-32, Nishihonmachi 1-chome
Ube-shi, Yamaguchi-ken(JP)

(72) Inventor: Ueno, Haruo
3-10-203, Inagekaigan 3-chome
Chiba-shi Chiba-ken(JP)

(72) Inventor: Yano, Takefumi
13-35, Wakamiya 2-chome
Ichihara-shi Chiba-ken(JP)

(72) Inventor: Inoue, Tokuji
975-19, Fukumasu
Ichihara-shi Chiba-ken(JP)

(72) Inventor: Ikai, Shigeru
44-3, Yamaki
Ichihara-shi Chiba-ken(JP)

(72) Inventor: Kai, Yoshiyuki
860-5, Saze
Ichihara-shi Chiba-ken(JP)

(72) Inventor: Shimizu, Michimasa
44-3, Yamaki
Ichihara-shi Chiba-ken(JP)

(72) Inventor: Tamura, Masanori
44-3, Yamaki
Ichihara-shi Chiba-ken(JP)

(74) Representative: Fisher, Bernard et al,
Raworth, Moss & Cook 36 Sydenham Road
Croydon Surrey CR0 2EF(GB)

(54) Process for polymerization of alpha-olefins.

(57) α-Olefins having at least 3 carbon atoms are polymerized in the presence of an organic acid ester by using a catalyst formed from a solid catalyst component and an organic aluminum compound represented by the formula: $AlR^4_3$ wherein $R^4$ is $C_{1-6}$ alkyl. The solid catalyst component is prepared by reacting a reaction product of an aluminum halide and an organic silicon compound of the formula: $R^1_nSi(OR^2)_{4-n}$ wherein $R^1$ is phenyl or $C_{1-8}$ alkyl, $R^2$ is $C_{1-8}$ alkyl and n is 0, 1, 2 or 3, with a Grignard compound of the formula: $R^3MgX$ wherein $R^3$ is $C_{1-8}$ alkyl and X is halogen; contacting the carrier, so obtained, with a titanium tetrahalide and an organic acid ester; and then, containing the treated solid with a titanium tetrahalide.

EP 0 074 275 A1

Croydon Printing Company Ltd.

# PROCESS FOR POLYMERIZATION OF α-OLEFINS

## BACKGROUND OF THE INVENTION

### (1) Field of the Invention

This invention relates to a process for the polymerization of α-olefins.

### (2) Description of the Prior Art

Many proposals have been made on the process for polymerizing α-olefins in the presence of a catalyst comprising a solid catalyst component which exhibits a high polymerization activity per unit weight of titanium contained in the solid catalyst component. The inventors previously proposed a process for the polymerization of α--olefins, in which a stereoregular α-olefin polymer can be obtained in a very high yield per unit weight of titanium contained in a solid catalyst component and the catalyst residue need not be removed from the obtained α-olefin polymer (see U.S. Patent No. 4,297,463). The solid catalyst component used in this process is prepared by reacting a reaction product of an aluminum halide and a tetraalkoxysilane with a Grignard compound, contacting the carrier, so obtained, with a titanium tetrahalide, treating the obtained titanium-containing solid with an organic acid ester and then contacting the treated solid with a titanium tetrahalide. In this preparation process, at each of the steps for preparing the solid catalyst component from the carrier, filtration of the solid and, in some cases, washing is necessary, and the preparation of the solid catalyst component is considerably complicated and troublesome.

## SUMMARY OF THE INVENTION

A primary object of the present invention is to provide an improved process for the polymerization of α-olefins over the conventional polymerization processes including the above-mentioned process, wherein α-olefin polymers can be produced in a much higher yield per unit weight of titanium contained in the solid catalyst component.

More specifically, in accordance with the present

invention, a process is provided for the polymerization of α-olefins, which comprises polymerizing an α-olefin having at least 3 carbon atoms in the presence of an organic acid ester by using a catalyst formed from a solid catalyst component and an organic aluminum compound represented by the following formula:

$AlR^4_3$ [III]

wherein $R^4$ stands for an alkyl group having 1 to 6 carbon atoms,

said solid catalyst component being prepared by reacting a reaction product of an aluminum halide, and an organic silicon compound represented by the following formula:

$R^1_nSi(OR^2)_{4-n}$ [I]

wherein $R^1$ stands for a phenyl group or an alkyl group having 1 to 8 carbon atoms, $R^2$ stands for an alkyl group having 1 to 8 carbon atoms and n is 0, 1, 2 or 3,

with a Grignard compound represented by the following formula:

$R^3MgX$ [II]

wherein $R^3$ stands for an alkyl group having 1 to 8 carbon atoms and X stands for a halogen atom,

contacting the carrier, so obtained, with a titanium tetrahalide and an organic acid ester, and then contacting the treated solid with a titanium tetrahalide.

DESCRIPTION OF THE PREFERRED EMBODIMENTS

The process of the present invention is more advantageous than the process disclosed in U.S. Patent No.4,297,463 in that the preparation of the solid catalyst component can be prepared by a relatively simple process and the yield of the resulting α-olefin polymer per unit weight of titanium contained in the solid catalyst component is very high.

In the present invention, the solid catalyst component is prepared from substantially anhydrous compounds in an atmosphere of an inert gas such as nitrogen or argon.

As examples of the aluminum halide, aluminum chloride,

aluminum bromide and aluminum iodide can be mentioned. Of these, aluminum chloride is preferable.

As examples of the organic silicon compound represented by the formula [I], tetramethoxysilane, tetraethoxysilane, tetra-n-propoxysilane, tetra-n-butoxysilane, tetraisopentoxysilane, tetra-n-hexoxysilane, methyltrimethoxysilane, methyltriethoxysilane, methyltri-n-butoxysilane, methyltriisopentoxysilane, methyltri-n-hexoxysilane, methyltriisooctoxysilane, ethyltriethoxysilane, ethyltriisopropoxysilane, ethyltriisopentoxysilane, n-butyltriethoxysilane, isobutyltriethoxysilane, isopentyltriethoxysilane, isopentyltri-n-butoxysilane, dimethyldiethoxysilane, dimethyldi-n-butoxysilane, dimethyldiisopentoxysilane, diethyldiethoxysilane, diethyldiisopentoxysilane, di-n-butyldiethoxysilane, diisobutyldiisopentoxysilane, trimethylmethoxysilane, trimethylethoxysilane, trimethylisobutoxysilane, triethylisopropoxysilane, tri-n-propylethoxysilane, tri-n-butylethoxysilane, triisopentylethoxysilane, phenyltriethoxysilane, phenyltriisobutoxysilane, phenyltriisopentoxysilane, diphenyldiethoxysilane, diphenyldiisopentoxysilane, diphenyldioctoxysilane, triphenylmethoxysilane, triphenylethoxysilane and triphenylisopentoxysilane can be mentioned.

It is preferable that the aluminum halide be used for the reaction in an amount of 0.1 to 10 moles, more preferably 0.3 to 2 moles, per mole of the organic silicon compound.

The reaction of the aluminum halide with the organic silicon compound is ordinarily carried out by stirring both the compounds in an inert organic solvent at a temperature of from -50°C to 100°C for 0.1 to 2 hours. The reaction is advanced with generation of heat, and the reaction product is obtained in the form of a solution in an inert organic solvent. When a tetraalkoxysilane, that is, a compound of the formula [I] in which n is 0, is used, a small amount of an insoluble substance is sometimes formed. This insoluble substance does not influence the polymerization activity of the final catalyst, but in order to facilitate the preparation of the solid catalyst component, it is preferable that the insoluble substance be removed from the reaction mixture by filtration. The reaction product is used in the form of the solution in the inert organic solvent for the reaction with a Grignard compound.

As the Grignard compound represented by the formula [II], an alkyl magnesium chloride, i.e., the compound in which X is a chlorine atom, is preferably used. As specific examples, methyl magnesium chloride, ethyl magnesium chloride, n-butyl magnesium chloride and n-hexyl magnesium chloride can be mentioned.

It is preferable that the Grignard compound be used in an amount of 0.05 to 4 moles, more preferably 1 to 3 moles, per mole of the aluminum halide used for the formation of the above-mentioned reaction product.

The method in which the reaction product of the aluminum halide with the organic silicon compound is reacted with the Grignard compound is not particularly critical, but it is preferable that the reaction be effected by gradually adding a solution of the Grignard compound in an ether or an ether/aromatic hydrocarbon mixed solvent to a solution of the above-mentioned reaction product in an organic solvent or by adding the solution of the above-mentioned reaction product to the solution of the Grignard compound. A compound represented by the following formula:

$$R^5-O-R^6$$

wherein $R^5$ and $R^6$ stand for an alkyl group having 2 to 8 carbon atoms,

is preferably used as the ether in which the Grignard compound is dissolved. As examples of the ether, diethyl ether, diisopropyl ether, di-n-butyl ether and diisoamyl ether can be mentioned.

The reaction is carried out ordinarily at a temperature of from -50 to 100°C and preferably at a temperature of from -20 to 25°C. The reaction time is not particularly critical, but ordinarily, the reaction is conducted for not less than 5 minutes. As the reaction proceeds, the formed

carrier is precipitated. The so obtained carrier may be contacted in the form of the as-obtained reaction mixture with a titanium tetrahalide and an organic acid ester. However, it is preferable that the formed carrier be washed with an inert organic solvent before the contact treatment.

As examples of the titanium tetrahalide, titanium tetrachloride, titanium tetrabromide and titanium tetraiodide can be mentioned. Of these, titanium tetrachloride is preferable.

As the organic acid ester, aliphatic carboxylic acid esters, aromatic carboxylic acid esters and alicyclic carboxylic acid esters can be mentioned. Among these organic carboxylic acid esters, aromatic carboxylic acid esters represented by the following formula:

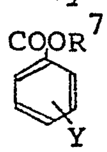

wherein $R^7$ stands for an alkyl group having 1 to 6 carbon atoms and Y stands for a hydrogen atom, an alkyl having 1 to 4 carbon atoms, or a group $-OR^8$ in which $R^8$ stands for an alkyl group having 1 to 4 carbon atoms,

are preferable. As examples of the aromatic carboxylic acid esters, methyl benzoate, ethyl benzoate, methyl toluylate, ethyl toluylate, methyl anisate and ethyl anisate can be mentioned.

The method for contacting the carrier with the titanium tetrahalide and the organic acid ester is not particularly critical. For example, the following methods can be adopted.

(1) A method in which the titanium tetrahalide is added to a slurry of the carrier in an inert organic solvent and then the organic acid ester is added thereto.

(2) A method in which both the titanium tetrahalide and the organic acid ester are simultaneously added to the above-mentioned slurry or a premixture of the titanium tetrahalide and the organic acid ester is added to the slurry.

(3) A method in which the organic acid ester is added

to the above-mentioned slurry, and then the titanium tetrahalide is immediately added.

In each of these methods, it is preferable that the titanium tetrahalide be used in an amount of at least 1 mole, more preferably 2 to 100 moles, per mole of the Grignard compound used at the time of the preparation of the carrier and that the organic acid ester be used in an amount of 5 to 30% by weight, more preferably 15 to 25% by weight, based on the weight of the carrier.

It is preferable that the contact temperature be 20 to 200°C, more preferably 60 to 140°C. The contact time is not particularly critical, but the contact time is ordinarily 0.5 to 3 hours.

The obtained treated solid is recovered from the slurry by filtration, and if desired, it is washed with an inert organic solvent.

Then, the treated solid is contacted with the titanium tetrahalide again. The amount of the titanium tetrahalide used and the contact temperature and time may be the same as those adopted for the preparation of the treated solid.

The solid catalyst component is recovered from the slurry by filtration or decantation and washed with an inert organic solvent. The content of titanium in the solid catalyst component is 0.5 to 5% by weight.

In the present invention, an α-olefin having at least 3 carbon atoms is polymerized in the presence of an organic acid ester by using a catalyst formed from the above-mentioned solid catalyst component and an organic aluminum compound represented by the formula III.

As examples of the organic aluminum compound, trimethyl aluminum, triethyl aluminum, triisobutyl aluminum and tri-n-hexyl aluminum can be mentioned. Of these, triethyl aluminum and triisobutyl aluminum are preferable. The organic aluminum compound is ordinarily used in an amount of 1 to 1,000 moles per gram-atom of titanium contained in the solid catalyst component.

A suitable organic acid ester used in the polymerization

system may be selected from the organic acid esters mentioned hereinbefore with respect to the organic acid ester to be used for the preparation of the treated solid. It is preferable that the amount of the organic acid ester present in the polymerization system be in the range of 0.05 to 0.6 mole per mole of the organic aluminum compound used for the preparation of the catalyst.

As examples of the α-olefin having at least 3 carbon atoms to be polymerized in the process of the present invention, propylene, 1-butene, 4-methyl-1-pentene and 1-hexene can be mentioned. In the present invention, two or more of these α-olefins having at least 3 carbon atoms may be copolymerized, or the α-olefin having at least 3 carbon atoms may be copolymerized with ethylene.

The polymerization reaction may be carried out under the same conditions as adopted for the polymerization of α-olefins using an ordinary Ziegler-Natta catalyst.

The polymerization reaction may be carried out in the liquid phase or gaseous phase.

When the polymerization reaction is carried out in the liquid phase, an inert organic solvent may be used as the polymerization solvent, or the liquid α-olefin per se may be used as the polymerization solvent. The concentration of the catalyst in the polymerization solvent is not particularly critical, but ordinarily, the concentration is such that the amount of the solid catalyst component is in the range of 0.001 to 1 mg-atoms, as titanium metal, per liter of the polymerization solvent and the amount of the organic aluminum compound is in the range of 0.01 to 100 millimoles per liter of the polymerization solvent.

As the inert organic solvent to be used for the preparation of the solid catalytic component, and in some cases, for the polymerization of α-olefins, aliphatic hydrocarbons such as hexane and heptane, aromatic hydrocarbons such as toluene, benzene and xylene, and halogenated products of these hydrocarbons can be mentioned.

The polymerization reaction is carried out in a

substantially water-free and oxygen-free state. The polymerization temperature is ordinarily 30 to 100°C, and the polymerization pressure is ordinarily 1 to 80 $kg/cm^2$.

The molecular weight of the resulting α-olefin polymer can easily be adjusted by adding hydrogen to the polymerization system.

The present invention will now be described in detail with reference to the following examples.

In the Examples, the "polymerization activity" indicates the yield (kg) of the polymer per gram of titanium contained in the solid catalyst component used for the polymerization. "H.I." is a proportion (% by weight) of the unextracted polymer residue to the sum of the unextracted polymer and the extracted polymer as measured after the polymer product is extracted with boiling n-heptane for 20 hours. "M.I." indicates the melt flow index as measured at 230°C under a load of 2.16 $kg/cm^2$ according to ASTM D-1238. Incidentally, in each example, the preparation of the solid catalyst component was carried out in an atmosphere of dry nitrogen gas.

Example 1

(1) Preparation of Solid Catalyst Component

To 30 ml of toluene containing 15 millimoles of anhydrous aluminum chloride 10 ml of toluene containing 14.5 millimoles of phenyltriethoxysilane was dropped at room temperature over a period of 30 minutes, and the mixture was heated to 60°C and maintained at that temperature for 1 hour to conduct the reaction.

Then, 20 ml of diisoamyl ether containing 27 millimoles of n-butyl magnesium chloride was dropped to the reaction mixture, maintained at -10°C to -8°C, over a period of 45 minutes. Then, the mixture was heated to 30°C and maintained at this temperature for 1 hour. Then, 4.4 g of the precipitated carrier was recovered by filtration and washed with 30 ml of toluene three times.

The carrier was suspended in 30 ml of toluene, and at room temperature, 136 millimoles of titanium tetrachloride

was added to the suspension and then 5.28 millimoles (18% by weight based on the carrier) of ethyl benzoate was added thereto. The mixture was heated to 90°C and maintained at this temperature for 1 hour. The obtained solid was recovered by filtration at 90°C, washed with 30 ml of n-heptane three times and then with 30 ml of toluene once.

The treated solid was suspended in 30 ml of toluene, and 136 millimoles of titanium tetrachloride was added to the suspension. The mixture was maintained at 90°C for 1 hour. The obtained solid catalyst component was recovered by filtration at 90°C, washed five times with 30 ml of n-heptane each time, and then suspended in 80 ml of n-heptane to form a suspension containing 3.2 g of the solid catalyst component. The content of titanium in the solid catalyst component was 2.31% by weight.

(2) Polymerization

A glass ampoule having the suspension of the solid catalyst component (9.2 mg as the solid catalyst component) sealed therein was attached to a 2-liter inner volume autoclave equipped with a stirrer, and air in the autoclave was replaced by nitrogen. The autoclave was charged with 2.95 ml of an n-heptane solution containing 0.22 millimole methyl toluylate and then with 4.04 ml of an n-heptane solution containing triethyl aluminum in such an amount that the molar ratio thereof (hereinafter referred to as "Al/Ti") per gram-atom of titanium contained in the solid catalyst component was 200. Then, 1,200 ml of liquid propylene was introduced into the autoclave, and the autoclave was shaken. The contents of the autoclave were heated to 65°C, stirring was started, and the glass ampuole was broken. Propylene was polymerized at 65°C for 1 hour. After completion of the polymerization reaction, unreacted propylene was discharged, the glass pieces were removed, and the formed polypropylene was dried under reduced pressure at 50°C for 20 hours to obtain 151.76 g of white powdery polypropylene. The polymerization activity was 714 and the H.I. value was 95.1%.

Examples 2 and 3

The procedure of Example 1 was repeated in the same manner except that the amount of ethyl benzoate was varied to 15% by weight (Example 2) and 20% by weight (Example 3) based on the weight of the carrier. The obtained results are shown in Table 1.

Table 1

| Example No. | Titanium Content (% by weight) | Polymerization Activity | H.I. (%) |
|---|---|---|---|
| 2 | 2.73 | 648 | 94.6 |
| 3 | 2.10 | 729 | 95.5 |

Example 4

The procedure of Example 1 was repeated in the same manner except that the order of addition of titanium tetrachloride and ethyl benzoate to the carrier slurry was reversed, that is, ethyl benzoate was first added to the carrier slurry and titanium tetrachloride was then added.

The amount of titanium in the solid catalyst component was 2.01% by weight, the polymerization activity was 697, and the H.I. value was 95.7%.

Example 5

The procedure of Example 1 was repeated in the same manner except that titanium tetrachloride and ethyl benzoate were simultaneously added to the carrier slurry.

The content of titanium in the solid catalyst component was 2.21% by weight, the polymerization activity was 733, and the H.I. value was 95.3%.

Examples 6 and 7

The procedure of Example 1 was repeated in the same manner except that the Al/Ti ratio was varied as indicated in Table 2. The obtained results are shown in Table 2.

Table 2

| Example No. | Al/Ti Ratio | Polymerization Activity | H.I.(%) |
|---|---|---|---|
| 6 | 100 | 749 | 96.8 |
| 7 | 300 | 662 | 94.8 |

Examples 8 and 9

The procedure of Example 1 was repeated in the same manner except that the amount of methyl p-toluylate used was varied as shown in Table 3. The obtained results are shown in Table 3.

Table 3

| Example No. | Methyl p-Toluylate (millimole) | Polymerization Activity | H.I. (%) |
|---|---|---|---|
| 8 | 0.30 | 615 | 96.5 |
| 9 | 0.44 | 474 | 96.9 |

Examples 10 through 12

The procedure of Example 8 was repeated in the same manner except that prior to introduction of liquid propylene, hydrogen was introduced into the autoclave until the hydrogen

pressure (gauge pressure) reached the level shown in Table 4. The obtained results are shown in Table 4.

Table 4

| Example No. | Hydrogen Pressure ($kg/cm^2$) | Polymerization Activity | H.I. (%) | M.I. (g/10 min) |
|---|---|---|---|---|
| 10 | 0.5 | 654 | 95.1 | 1.9 |
| 11 | 0.9 | 701 | 94.6 | 3.9 |
| 12 | 1.5 | 666 | 93.6 | 9.6 |

Examples 13 and 14

The procedure of Example 1 was repeated in the same manner except that a predetermined amount of an organic silicon compound shown in Table 5 was used instead of phenyltriethoxysilane. The obtained results are shown in Table 5.

Table 5

| Example | Organic Silicon Compound | | Titanium Content | Polymeriza tion | |
|---|---|---|---|---|---|
| No. | Name | Amount (millimoles) | (% by weight) | Activ ity | H.I. |
| 13 | Tetraethoxysilane | 14.5 | 2.26 | 571 | 95.5 |
| 14 | Dimethyldiethoxy-silane | 22.0 | 2.33 | 687 | 94.7 |

## CLAIMS

1. A process for the polymerization of α-olefins, which comprises polymerizing an α-olefin having at least 3 carbon atoms in the presence of an organic acid ester by using a catalyst formed from a solid catalyst component and an organic aluminum compound represented by the following formula:

$$AlR^4_3 \qquad [III]$$

wherein $R^4$ stands for an alkyl group having 1 to 6 carbon atoms,

said solid catalyst component being prepared by reacting a reaction product of an aluminum halide and an organic silicon compound represented by the following formula:

$$R^1_nSi(OR^2)_{4-n} \qquad [I]$$

wherein $R^1$ stands for a phenyl group or an alkyl group having 1 to 8 carbon atoms, $R^2$ stands for an alkyl group having 1 to 8 carbon atoms and n is 0, 1, 2 or 3,

with a Grignard compound represented by the following formula:

$$R^3MgX \qquad [II]$$

wherein $R^3$ stands for an alkyl group having 1 to 8 carbon atoms and X stands for a halogen atom,

contacting the carrier, so obtained, with a titanium tetrahalide and an organic acid ester and then contacting the treated solid with a titanium tetrahalide.

2. A process according to claim 1, wherein said reaction product of an aluminum chloride and the organic silicon compound is prepared by reacting 0.1 to 10 moles, per mole of the organic silicon compound, of an aluminum halide in an inert organic solvent at a temperature of -50 to 100°C for 0.1 to 2 hours.

3. A process according to claim 1 or 2, wherein said aluminum halide is aluminum chloride.

4. A process according to claim 1 or 2, wherein said organic silicon compound is tetraethoxysilane, dimethyldiethoxysilane or phenyltriethoxysilane.

5. A process according to claim 1, wherein the reaction product of an aluminum halide with the organic silicon compound is reacted with 0.05 to 4 moles of the Grignard compound, per mole of the aluminum halide used for the preparation of said reaction product, in a manner such that a solution of said reaction product in an inert organic solvent is gradually incorporated with a solution of the Grignard compound in an ether or a mixed solvent of an ether and an aromatic organic solvent, said ether being represented by the formula:

$$R^5-O-R^6$$

wherein $R^5$ and $R^6$ stand for an alkyl group having 2 to 8 carbon atoms.

6. A process according to claim 1 or 5, wherein said Grignard compound is alkyl magnesium chloride.

7. A process according to claim 1 or 5, wherein said carrier, prepared by the reaction of the reaction product of an aluminum halide and the organic silicon compound with the Grignard compound, is washed with an inert organic solvent prior to said contact treatment with a titanium tetrahalide and an organic acid ester.

8. A process according to claim 1, wherein said carrier is contacted with at least one mole of a titanium tetrahalide per mole of the Grignard compound used for the preparation of said carrier, and 5 to 30% by weight of an organic acid ester based on the weight of said carrier.

9. A process according to claim 1, wherein said contact treatment of the carrier with a titanium tetrahalide and an organic acid ester is carried out at a temperature of 20 to 200°C for 0.5 to 3 hours in a manner such that the titanium tetrahalide is added to a slurry of the carrier in an inert organic solvent and then the organic acid ester is added thereto; the titanium tetrahalide and the organic acid ester are simultaneously added to said carrier slurry; or the organic acid ester is added to said carrier slurry and then the titanium halide is immediately added thereto.

10. A process according to claim 1, 8 or 9, wherein said titanium tetrahalide is titanium tetrachloride.

11. A process according to claim 1, 8 or 9, wherein said organic acid ester, with which the carrier is contacted, is an aromatic carboxylic acid ester represented by the formula:

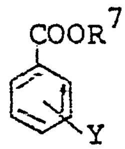

wherein $R^7$ stands for an alkyl group having 1 to 6 carbon atoms and Y stands for a hydrogen atom, an alkyl having 1 to 4 carbon atoms or a group $-OR^8$ in which $R^8$ stands for an alkyl group having 1 to 4 carbon atoms.

12. A process according to claim 1, wherein said contact treatment of the treated solid with a titanium tetrahalide is carried out at a temperature of 20 to 200°C for 0.5 to 3 hours by using at least one mole of a titanium tetrahalide per mole of the Grignard compound used for the preparation of the carrier.

13. A process according to claim 1, wherein the amount of the organic aluminum compound is in the range of 1 to 1,000 moles per gram-atom of titanium contained in the solid catalyst component.

14. A process according to claim 1 or 13, wherein the organic aluminum compound is triethyl aluminum or triisobutyl aluminum.

15. A process according to claim 1, wherein said organic acid ester present in the polymerization system is an aromatic carboxylic acid ester represented by the formula:

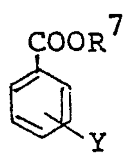

wherein $R^7$ stands for an alkyl group having 1 to 6 carbon atoms and Y stands for a hydrogen atom, an alkyl having 1 to 4 carbon atoms or

a group $-OR^8$ in which $R^8$ stands for an alkyl group having 1 to 4 carbon atoms;

and the amount of the aromatic carboxylic acid ester is in the range of 0.05 to 0.6 mole per mole of the organic aluminum compound used for the preparation of the catalyst.

16. A process according to claim 1, wherein an α-olefin is polymerized in an inert organic solvent containing, per liter of the solvent, 0.001 to 1 mg-atom of the solid catalyst component expressed in terms of titanium contained therein and 0.01 to 100 millimoles of the organic aluminum compound at a temperature of 30 to 100°C and a pressure of 1 to 80 $kg/cm^2$.

17. A solid catalyst component for the polymerization of α-olefins, which is prepared by reacting a reaction product of an aluminum halide and an organic silicon compound represented by the following formula:

$$R^1_nSi(OR^2)_{4-n} \quad [I]$$

wherein $R^1$ stands for a phenyl group or an alkyl group having 1 to 8 carbon atoms, $R^2$ stands for an alkyl group having 1 to 8 carbon atoms and n is 0, 1, 2, or 3,

with a Grignard compound represented by the following formula:

$$R^3MgX \quad [II]$$

wherein $R^3$ stands for an alkyl group having 1 to 8 carbon atoms and X stands for a halogen atom,

contacting the carrier, so obtained, with a titanium tetrahalide and an organic acid ester and then contacting the treated solid with a titanium tetrahalide.

18. A solid catalyst component according to claim 17, wherein said reaction product of an aluminum chloride and the organic silicon compound is prepared by reacting 0.1 to 10 moles, per mole of the organic silicon compound, of an aluminum halide in an inert organic solvent at a temperature of -50°C to 100°C for 0.1 to 2 hours.

19. A solid catalyst component according to claim 17,

wherein said aluminum halide is aluminum chloride.

20. A solid catalyst component according to claim 17, wherein said organic silicon compound is tetraethoxysilane, dimethyldiethoxysilane or phenyltriethoxysilane.

21. A solid catalyst component according to claim 17, wherein the reaction product of an aluminum halide with the organic silicon compound is reacted with 0.05 to 4 moles of the Grignard compound, per mole of the aluminum halide used for the preparation of said reaction product, in a manner such that a solution of said reaction product in an inert organic solvent is gradually incorporated with a solution of the Grignard compound in an ether or a mixed solvent of an ether and an aromatic organic solvent, said ether being represented by the formula:

$$R^5-O-R^6$$

wherein $R^5$ and $R^6$ stand for an alkyl group having 2 to 8 carbon atoms.

22. A solid catalyst component according to claim 17, wherein said Grignard compound is alkyl magnesium chloride.

23. A solid catalyst component according to claim 17, wherein said carrier, prepared by the reaction of the reaction product of an aluminum halide and the organic silicon compound with the Grignard compound, is washed with an inert organic solvent prior to said contact treatment with a titanium tetrahalide and an organic acid ester.

24. A solid catalyst component according to claim 17, wherein said carrier is contacted with at least one mole of a titanium tetrahalide per mole of the Grignard compound used for the preparation of said carrier, and 5 to 30% by weight of an organic acid ester based on the weight of said carrier.

25. A solid catalyst component according to claim 17, wherein said contact treatment of the carrier with a titanium tetrahalide and an organic acid ester is carried out at a temperature of 20 to 200°C for 0.5 to 3 hours in a manner such that the titanium tetrahalide is added to a slurry of the carrier in an inert organic solvent and then

the organic acid ester is added thereto; the titanium tetrahalide and the organic acid ester are simultaneously added to said carrier slurry; or the organic acid ester is added to said carrier slurry and then the titanium halide is immediately added thereto.

26. A solid catalyst ingredient according to claim 17, wherein said titanium tetrahalide is titanium tetrachloride.

27. A solid catalyst ingredient according to claim 17, wherein said organic acid ester, with which the carrier is contacted, is an aromatic carboxylic acid ester represented by the formula:

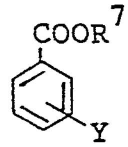

wherein $R^7$ stands for an alkyl group having 1 to 6 carbon atoms and Y stands for a hydrogen atom, an alkyl having 1 to 4 carbon atoms or a group $-OR^8$ in which $R^8$ stands for an alkyl group having 1 to 4 carbon atoms.

28. A solid catalyst component according to claim 17, wherein said contact treatment of the treated solid with a titanium tetrahalide is carried out at a temperature of 20°C to 200°C for 0.5 to 3 hours by using at least one mole of a titanium tetrahalide per mole of the Grignard compound used for the preparation of the carrier.

European Patent Office

# EUROPEAN SEARCH REPORT

0074275

Application number

EP 82 30 4706

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | EP-A-0 026 027 (UBE INDUSTRIES) *Claims 1-24* | 1-28 | C 08 F 10/00<br>C 08 F 4/64 |
| P,E | GB-A-2 078 234 (UBE INDUSTRIES) *Claims 1-24* | 1-28 | |

TECHNICAL FIELDS SEARCHED (Int. Cl. 3)

C 08 F 10/00
C 08 F 10/02
C 08 F 10/04
C 08 F 10/06
C 08 F 10/08
C 08 F 10/10
C 08 F 10/12
C 08 F 10/14
C 08 F 110/00
C 08 F 110/02
C 08 F 110/04
C 08 F 110/06
C 08 F 110/08
C 08 F 110/10
C 08 F 110/12
C 08 F 110/14
C 08 F 210/00
C 08 F 210/02
-/-

The present search report has been drawn up for all claims

| Place of search | Date of completion of the search | Examiner |
|---|---|---|
| THE HAGUE | 21-12-1982 | WEBER H. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons

& : member of the same patent family, corresponding document

EPO Form 1503. 03.82

0074275

European Patent Office

# EUROPEAN SEARCH REPORT

Application number

EP 82 30 4706

Page 2

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl. ³) |
| | | | |
| | | | TECHNICAL FIELDS SEARCHED (Int. Cl. ³) |
| | | | C 08 F 210/04<br>C 08 F 210/06<br>C 08 F 210/08<br>C 08 F 210/10<br>C 08 F 210/12<br>C 08 F 210/14<br>C 08 F 210/16<br>C 08 F 4/64<br>C 08 F 4/62<br>C 08 F 4/60 |

The present search report has been drawn up for all claims

| Place of search | Date of completion of the search | Examiner |
|---|---|---|
| THE HAGUE | 21-12-1982 | WEBER H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document